Europäisches Patentamt

European Patent Office

Office européen des brevets

(11) Publication number: **0 337 705**
**A2**

## (12) EUROPEAN PATENT APPLICATION

(21) Application number: **89303522.0**

(22) Date of filing: **10.04.89**

(51) Int. Cl.⁴: **C09D 11/10**

(30) Priority: **11.04.88 GB 8808461**

(43) Date of publication of application:
**18.10.89 Bulletin 89/42**

(84) Designated Contracting States:
**AT BE CH DE ES FR GB IT LI NL SE**

(71) Applicant: **Sericol Group Limited**
**24 Parsons Green Lane**
**London SW6 4HT(GB)**

(72) Inventor: **Fassam, Robert Augustus**
**6 Audley Avenue Westbrook**
**Margate Kent(GB)**
Inventor: **Jezequel, Helen**
**Uprising Shottendane Road**
**Margate Kent(GB)**

(74) Representative: **Claisse, John Anthony, Dr.**
**97 Portway**
**Wells Somerset BA5 2BR(GB)**

(54) **Printing inks.**

(57) The invention provides screen printing inks consisting of a water-soluble, radiation curable component, a photoinitiator and/or a photochemical crosslinking agent, a pigment and/or a water soluble dye, and an ionic, non-radiation curable thickener. High screen stability has been achieved without compromising cure speed, combined with a low printed film weight comparable with that obtained with solvent based inks.

## PRINTING INKS

This invention concerns printing inks, and in particular screen printing inks.

Until recently the majority of screen printing inks have been solvent based and dried by evaporation of the solvent. However, these inks suffer from having to be formulated to compromise between increasing the drying speed on the printed substrate to increase the rate of printing and reducing the rate of hardening of the ink in the mesh of the screen to prevent blocking of the screen mesh. The ability of an ink to resist hardening in the screen is known as screen stability. This compromise results in the speed of drying of the inks having to be extended if they are to have sufficient stability to maintain detail during a print production run from a particular stencil.

More recently, radiation curable inks have been proposed which have screen stability which does not depend on cure speed. This allows fast cure speeds to be obtained without sacrificing screen stability. Unfortunately, screen printed radiation curable inks have the disadvantage of a high film weight or ink deposit. This can be minimised to a certain extent by the use of fine or semi-calendered screen meshes, but it is still not ideal.

A hitherto proposed method of obtaining a lower film weight with a radiation curable coating is to incorporate water using an oil in water emulsion, a radiation curable composition being emulsified in a water based varnish. Such systems have the disadvantage of having poor screen stability.

Alternatively, it has been proposed to use water soluble radiation curable resins/oligomers. However, when used for screen printing they offer little advantage over non-aqueous radiation curable inks as the amount of water that can be added while maintaining a satisfactory printing viscosity is small (approximately 20 percent by weight).

According to the present invention there is provided a screen printing ink comprising a water-soluble radiation-curable component, a photoinitiator and/or a photochemical crosslinking agent, a pigment and/or a water soluble dye, and an ionic non-radiation curable thickener.

The use of an ionic thickener has enabled significant amounts of water to be incorporated into the inks while providing inks having a satisfactory application viscosity. The ionic thickener should furthermore be non-radiation curable, at least under the conditions used to cure the inks. Examples of thickeners which can be used include sodium carboxymethylcellulose, poly-acrylic acids and clays, e.g. montmorillonite, kaolinite or attapulgite.

Screen printing inks of this invention have shown a high level of screen stability without compromising cure speed, combined with an ability to obtain a substantially lower printed film weight than with hitherto proposed radiation curable inks, the dried and cured film weight often being similar to that obtained with solvent based inks. Since solvents are in general unnecessary in inks of the present invention, the environmental problems associated with certain solvents used in hitherto proposed screen printing inks can be avoided.

The amount of water present in the inks of the present invention when used for printing is preferably from 20 to 80 percent by weight of the ink, more preferably from 30 to 70 percent, and advantageously from 40 to 60 percent by weight of the ink. However, although such amounts of water will usually be used when the inks are to be printed, the present invention includes inks containing less and even substantially no water, for example ink concentrates which can be diluted with water prior to use. Concentrates enable the bulk of an ink to be reduced, for example for transport.

The radiation curable component of the inks of the present invention includes a water soluble, radiation curable oligomer, e.g. a water soluble urethane acrylate, epoxy acrylate or polyester acrylate, an acrylamido-modified starch, or an amine-neutralised high acid value radiation curable oligomer, and a water soluble unsaturated monomer, e.g. N-vinyl-pyrrolidone, acrylamide, N,N'-methylene bis-acrylamide, N-methylol acrylamide, di-acetone acrylamide, trimethylolpropane ethoxylate triacrylate, dimethylaminoethyl acrylate, an acrylic carbamate, hydroxyethyl methacrylate or hydroxyethyl acrylate, in combination with a photoinitiator and/or a photochemical crosslinking agent. The photoinitiator and/or the photochemical crosslinking agent can be water soluble, a liquid, or a dispersed solid, e.g. a benzoin ether, a substituted acetophenone derivative, an acyloxime ester, a benzil ketal, a cyclic benzoin, benzophenone, a thioxanthone, a benzil or a quinone.

The compositions of the invention also include a pigment and/or a water soluble dye. Examples of yellow pigments which can be used include azo and diazo condensation yellow pigments, e.g. C.I. pigment Yellow 83, 93 or 128. Examples of magenta pigments which can be used include azo condensation red pigments, e.g. C.I. Pigment Red 146 or 184, or quinacridone reds, e.g. C.I. Pigment Red 122; and examples of cyan pigments which can be used include copper phthalocyanine $\beta$-form, e.g. C.I. Pigment Blue 15.

2

The speed of drying or evaporation of water from the inks can be adjusted, for example by the inclusion of a water miscible solvent, e.g. propan-2-ol, and/or a water soluble amine which can be selected to act as a synergist for the photoinitiator, e.g. N-methyl-N,N-diethanolamine, N,N-dimethylaminoethyl acrylate, N,N-dimethyl-N-ethanolamine, triethanolamine or 4-(2-hydroxyethyl)-morpholine.

The lay of the ink as well as its scuff/mar resistance can be improved by the inclusion of a silicone or non-silicone flow aid. Mar resistance and slip can be improved by the inclusion of a natural or synthetic wax. Waxes can also reduce the gloss of the dried and cured inks.

The gloss of the dried and cured inks can be adjusted by the inclusion of a mineral powder. Mineral powders can also be used to increase the viscosity of the inks, Examples of mineral powders which can be used include finely divided silicon dioxide, barium sulfate, calcium carbonate and hydrous magnesium silicate.

Premature polymerisation of inks of the present invention, in particular before application to a substrate, can be prevented by incorporating an inhibitor/stabiliser.

Inks of the present invention can be produced by initially dispersing the desired pigment in a radiation curable oligomer or using a predispersed pigment paste, and then slowly adding the remaining ingredients using a variable speed stirrer.

The following Examples are given by way of illustration only. All parts are by weight based on the weight of the final ink.

## Example 1

The following ingredients were mixed using a variable speed stirrer until a homogeneous mixture had been obtained. The mixture was then passed over a triple roll mill to more fully disperse the pigment until the mixture had a Hegman Gauge of 2 to 3 microns.

| | |
|---|---|
| water-soluble urethane acrylate | 8.0 |
| N-vinyl-pyrrolidone | 2.0 |
| Copper phthalocyanine β-form | — |
| C.I. Pigment Blue 15 | 2.0 |

The following ingredients were then added, and the mixture was stirred until homogeneous.

| | |
|---|---|
| water-soluble urethane acrylate | 34.0 |
| 1-(4-iso-propylphenyl)-2-hydroxy-2-methyl-propan-1-one | 5.0 |
| water | 40.0 |
| hydrophilic clay rheological additive | 4.0 |
| micronised polyethylene wax | 3.0 |
| hydrocarbon oil based defoamer | 2.0 |

The result was a cyan ink which, when thinned 30 percent by volume with water and screen printed under the same conditions as a commercially available radiation curable ink (Uvibond UV from Sericol Group Limited) without the water or clay present, exhibited superior dot definition with a much lower film weight whilst having the same cure speed and excellent screen stability. The ink was also capable of being thinned and cleaned up using water, whereas the radiation curable ink without water or clay present had to be thinned with a monomerand cleaned up with a cleaning solvent or solvent blend.

## Example 2

The following ingredients were mixed in sequence using a variable speed mixer:-

3

| | |
|---|---|
| water | 50.0 |
| water soluble urethane acrylate | 29.0 |
| carbon black pigment paste | 5.0 |
| hydrophilic clay rheological additive | 3.0 |
| micronised polyethylene wax | 3.0 |
| hydrocarbon oil based defoamer | 2.0 |
| N-methyl-N,N-diethanolamine | 5.0 |
| 4-(3-dimethylamino-2-hydroxypropoxy)-1-methyl-9H-thioxanthen-9-one methochloride | 3.0 |

The result was a black ink which, when screen printed unthinned under the same conditions as a commercially available radiation curable ink (Uvibond UV from Sericol Group Limited) without the water or clay present, exhibited superior dot definition with a much lower film weight whilst having the same cure speed and excellent screen stability. The ink was also capable of being thinned and cleaned up using water, whereas the radiation curable ink without the water or clay had to be thinned with monomer or a monomer blend and cleaned up with a cleaning solvent or solvent blend.

**Claims**

1. A screen printing ink comprising a water-soluble, radiation-curable component, a photoinitiator and/or a photochemical crosslinking agent, a pigment and/or a water soluble dye, and an ionic, non-radiation curable thickener.

2. A screen printing ink according to claim 1, wherein the ionic, non-radiation curable thickener comprises sodium carboxymethylcellulose, a poly-acrylic acid or a clay.

3. A screen printing ink according to claim 2, wherein the clay comprises montmorillonite, kaolinite or attapulgite.

4. A screen printing ink according to any of the preceding claims, containing from 20 to 80 percent of water based on the weight of the ink.

5. A screen printing ink according to any of the preceding claims, wherein the water soluble, radiation curable oligomer comprises a water soluble urethane acrylate, epoxy acrylate or polyester acrylate, an acrylamide-modified starch, or an amine-neutralised high acid value radiation curable oligomer.

6. A screen printing ink according to any of the preceding claims, wherein the water soluble unsaturated monomer comprises N-vinyl-pyrrolidone, acrylamide, N,N'-methylene bis-acrylamide, N-methylol acrylamide, di-acetone acrylamide, trimethylolpropane ethoxylate triacrylate, dimethylaminoethyl acrylate, an acrylic carbamate, hydroxyethyl methacrylate or hydroxyethyl acrylate.

7. A screen printing ink according to any of the preceding claims, including a water miscible solvent and/or a water soluble amine.

8. A screen printing ink according to any of the preceding claims, including a silicone or non-silicone flow aid.

9. A screen printing ink according to any of the preceding claims, including a mineral powder.

10. A screen printing ink according to any of the preceding claims, wherein the mineral powder comprises finely divided silicon dioxide, barium sulfate, calcium carbonate or hydrous magnesium silicate.